# EUROPEAN PATENT APPLICATION

(11) **EP 4 780 069 A1**
(43) Date of publication of application: **22.07.2026**
(21) Application number: 24876368.2
(22) Date of filing: 20.09.2024
(51) Int. Cl.: H04W 36/00

(54) **COMMUNICATION METHOD AND APPARATUS, STORAGE MEDIUM, AND PROGRAM PRODUCT**

(30) Priority: 11.10.2023 CN 202311316517
(71) Applicant: HUAWEI TECHNOLOGIES CO., LTD., Shenzhen 518129 (CN)
(72) Inventor: ZHAI, Bangzhao, Shenzhen, Guangdong 518129 (CN); HUANG, Xiuxuan, Shenzhen, Guangdong 518129 (CN); LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Pfenning, Meinig & Partner mbB
(86) International application number: PCT/CN2024/120157
(87) International publication number: WO 2025/077550

(57) **Abstract**

A communication method, a communication apparatus, a storage medium, and a program product are provided. During cell configuration, an access network device indicates whether a cell can be scheduled in a specific time unit. This allows a terminal device to make flexible use of a preferred carrier resource even when its downlink baseband processing capability is limited.

## Description

This application claims priority to Chinese Patent Application No. 202311316517.7, filed with the China National Intellectual Property Administration on October 11, 2023 and entitled "COMMUNICATION METHOD, COMMUNICATION APPARATUS, STORAGE MEDIUM, AND PROGRAM PRODUCT", which is incorporated herein by reference in its entirety.

### TECHNICAL FIELD

This application relates to the communication field, and in particular, to a communication method, a communication apparatus, a storage medium, and a program product.

### BACKGROUND

Carrier aggregation (carrier aggregation, CA) is a key technology for overcoming bandwidth limitations of a single carrier. By aggregating two or more component carriers (component carriers, CCs), it enables larger transmission bandwidths to serve terminal devices. Currently, most operators have around four to five CCs, and this number is expected to grow in the future.

However, cost constraints limit the downlink baseband processing capability of terminal devices, which in return restricts the number of cells that a terminal device can be scheduled on simultaneously. In practice, a quantity of cells deployed in a network far exceeds the quantity of cells that a terminal device can be scheduled on simultaneously. To deliver the best possible user experience, it is necessary to enable flexible use of preferred carrier resources within the limited capability of terminal devices.

The existing layer 1/layer 2 triggered mobility (L1/L2 Triggered Mobility, LTM) technology uses layer 2 signaling to indicate a terminal device to perform a cell handover, with a handover time of about 10 ms. However, this method always involves primary cell (primary cell, PCell) handover and does not support a scenario in which only secondary cell (secondary cell, SCell) handover is required. Alternative approaches that support SCell-only handover rely on layer 3 signaling, which incurs a delay of about 50 ms.

Therefore, a key challenge remains: when the quantity of cells deployed in a network far exceeds the quantity of cells that a terminal device can be scheduled on simultaneously, how can the terminal device, with its downlink baseband processing capability, make flexible use of preferred carrier resources.

### SUMMARY

This application provides a communication method, a communication apparatus, a storage medium, and a program product to enable a terminal device to make flexible use of a preferred carrier resource even when its downlink baseband processing capability is limited.

According to a first aspect, a communication method is provided. The method includes: receiving first configuration information, where the first configuration information includes configuration information of a first cell, the configuration information of the first cell includes first indication information, and the first indication information indicates that the first cell can be scheduled in a first time unit in a first time window; and receiving first downlink control information, where the first downlink control information is used to schedule a data channel of the first cell. In this aspect, a terminal device receives, from an access network device, configuration information of a cell, where the configuration information indicates whether the cell can be scheduled in a specific time unit; and the terminal device performs a cell handover based on the indication, thereby enabling flexible use of a preferred carrier resource even when its downlink baseband processing capability is limited.

According to a second aspect, a communication method is provided. The method includes: sending first configuration information, where the first configuration information includes configuration information of a first cell, the configuration information of the first cell includes first indication information, and the first indication information indicates that the first cell can be scheduled in a first time unit in a first time window; and sending first downlink control information, where the first downlink control information is used to schedule a data channel of the first cell. In this aspect, the access network device indicates, to the terminal device during cell configuration, whether a cell can be scheduled in a specific time unit. Based on the indication, the terminal device performs a cell handover, thereby enabling flexible use of a preferred carrier resource even when its downlink baseband processing capability is limited.

With reference to the first aspect or the second aspect, in a possible implementation, the first indication information is a bitmap, and a length of the bitmap is a quantity of time units in the first time window. In this implementation, the bitmap may explicitly indicate whether the first cell can be scheduled in each time unit in the first time window.

With reference to the first aspect or the second aspect, in another possible implementation, a first bit of the bitmap indicates that the first cell can be scheduled in the first time unit in the first time window; and a second bit of the bitmap indicates that the first cell cannot be scheduled in a second time unit in the first time window.

With reference to the first aspect or the second aspect, in another possible implementation, the first configuration information further includes configuration information of a second cell, the configuration information of the second cell includes second indication information, and the second indication information indicates that the second cell can be simultaneously scheduled in the first time unit.

With reference to the first aspect or the second aspect, in another possible implementation, a quantity of cells that can be simultaneously scheduled, as indicated by the first configuration information, is less than or equal to a quantity of configured cells.

With reference to the first aspect or the second aspect, in another possible implementation, the quantity of configured cells is greater than or equal to a quantity of cells that can be simultaneously scheduled, as indicated by capability information reported by the terminal device.

With reference to the first aspect or the second aspect, in another possible implementation, the quantity of cells that can be simultaneously scheduled, as indicated by the first configuration information is less than or equal to the quantity of cells that can be simultaneously scheduled, as indicated by the capability information reported by the terminal device.

According to a third aspect, a communication method is provided. The method includes: receiving second configuration information, where the second configuration information includes indexes of a first cell and a second cell that can be simultaneously scheduled in a first time unit in a first time window; and receiving downlink control information used to schedule data channels of the first cell and the second cell. In this aspect, a terminal device receives, indexes of cells that can be simultaneously scheduled in a time unit in a time window, as configured by an access network device. Based on the configuration, the terminal device performs a cell handover, thereby enabling flexible use of a preferred carrier resource even when its downlink baseband processing capability is limited.

With reference to the third aspect, in a possible implementation, the second configuration information further includes indexes of the first cell and a third cell that can be simultaneously scheduled in a second time unit in the first time window; and the method further includes: receiving downlink control information used to schedule data channels of the first cell and the third cell. In this implementation, the second configuration information may indicate not only indexes of cells that can be simultaneously scheduled in one time unit in the first time window, but also the indexes of the first cell and the third cell that can be simultaneously scheduled in the second time unit in the first time window. The third cell may be the same as or different from the second cell. The first time unit and the second time unit are any time units in the first time window.

According to a fourth aspect, a communication method is provided. The method includes: sending second configuration information, where the second configuration information includes indexes of a first cell and a second cell that can be simultaneously scheduled in a first time unit in a first time window; and sending downlink control information used to schedule data channels of the first cell and the second cell. In this aspect, an access network device includes, in configuration information, indexes of cells that can be simultaneously scheduled in a time unit in a time window. Based on the configuration information, the terminal device performs a cell handover, thereby enabling flexible use of a preferred carrier resource even when its downlink baseband processing capability is limited.

With reference to the fourth aspect, in a possible implementation, the second configuration information further includes indexes of the first cell and a third cell that can be simultaneously scheduled in a second time unit in the first time window; and the method further includes: sending downlink control information used to schedule data channels of the first cell and the third cell. In this implementation, the second configuration information may indicate not only indexes of cells that can be simultaneously scheduled in one time unit in the first time window, but also the indexes of the first cell and the third cell that can be simultaneously scheduled in the second time unit in the first time window. The third cell may be the same as or different from the second cell. The first time unit and the second time unit are any time units in the first time window.

With reference to the third aspect or the fourth aspect, in another possible implementation, a quantity of cells that can be simultaneously scheduled, as indicated by the second configuration information, is less than or equal to a quantity of configured cells.

With reference to the third aspect or the fourth aspect, in another possible implementation, the quantity of configured cells is greater than or equal to a quantity of cells that can be simultaneously scheduled, as indicated by capability information reported by the terminal device.

With reference to the third aspect or the fourth aspect, in another possible implementation, the quantity of cells that can be simultaneously scheduled, as indicated by the second configuration information, is less than or equal to the quantity of cells that can be simultaneously scheduled, as indicated by the capability information reported by the terminal device.

The methods according to the first aspect and the third aspect may be performed by the terminal device, may be performed by a module (for example, a processor, a chip, or a chip system) used in the terminal device, or may be implemented by a logical node, a logical module, or software that can implement all or part of functions of the terminal device.

The methods according to the second aspect and the fourth aspect may be performed by the access network device, may be performed by a module (for example, a processor, a chip, or a chip system) used in the access network device, or may be implemented by a logical node, a logic module, or software that can implement all or part of functions of the access network device.

According to a fifth aspect, a communication apparatus is provided, and is configured to implement the communication method in any one of the first aspect or the implementations of the first aspect; or configured to implement the communication method in any one of the third aspect or the implementations of the third aspect. The apparatus may be a terminal device, a module (for example, a processor, a chip, or a chip system) used in the terminal device, or a logical node, a logical module, or software that can implement all or part of functions of the terminal device.

According to a sixth aspect, a communication apparatus is provided, and is configured to implement the communication method in any one of the second aspect or the implementations of the second aspect; or configured to implement the communication method in any one of the fourth aspect or the implementations of the fourth aspect. The apparatus may be an access network device, a module (for example, a processor, a chip, or a chip system) used in the access network device, or a logical node, a logical module, or software that can implement all or part of functions of the access network device.

In a possible implementation, the communication apparatus in the fifth aspect and the sixth aspect includes a module configured to perform the method in any one of the first aspect to the fourth aspect or any one of the implementations of the first aspect to the fourth aspect.

In another possible implementation, the communication apparatus in the fifth aspect and the sixth aspect includes a processor coupled to a memory. The processor is configured to support the apparatus in performing a corresponding function in the foregoing communication method. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In another possible implementation, the communication apparatus in the fifth aspect and the sixth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to: receive a signal from a communication apparatus other than the communication apparatus and transmit the signal to the processor, or send a signal from the processor to a communication apparatus other than the communication apparatus. When the communication apparatus is the chip, the transceiver apparatus is a transceiver circuit or an input/output interface.

When the communication apparatus in the fifth aspect and the sixth aspect is the chip, a sending unit may be an output unit, for example, an output circuit or a communication interface; and a receiving unit may be an input unit, for example, an input circuit or a communication interface. When the communication apparatus is a terminal device, a sending unit may be a transmitter or a transmitter machine, and the receiving unit may be a receiver or a receiver machine.

According to a seventh aspect, a computer-readable storage medium is provided. The computer-readable storage medium stores a computer program or instructions. When the computer program or the instructions are executed, the methods according to the foregoing aspects is implemented.

According to an eighth aspect, a computer program product including instructions is provided. When the instructions are run on a communication apparatus, the communication apparatus is caused to perform the methods in the foregoing aspects.

According to a ninth aspect, a communication system is provided, and the communication system includes the communication apparatus in the fifth aspect and the communication apparatus in the sixth aspect.

### BRIEF DESCRIPTION OF DRAWINGS

FIG. 1 is a diagram of an architecture of a communication system 1000 to which embodiments of this application are applied;
FIG. 2 is a diagram of carrier aggregation;
FIG. 3 is a diagram of carrier aggregation capabilities of terminal devices;
FIG. 4 is a diagram of cell handover based on a layer 1/layer 2 triggered mobility technology;
FIG. 5 is a diagram of an uplink carrier switching technology;
FIG. 6 is a schematic flowchart of a communication method according to an embodiment of this application;
FIG. 7 is a diagram of an example of cell scheduling;
FIG. 8 is a schematic flowchart of another communication method according to an embodiment of this application;
FIG. 9 is a diagram of another example of cell scheduling;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

At least one piece (item) in this application below indicates one piece (item) or a plurality of pieces (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that in this application, terms such as "example" or "for example" are used to represent giving an example, an illustration, or a description. Any method or design scheme described as an "example" or "for example" in this application should not be construed as being preferred or having more advantages than another method or design scheme. To be precise, use of the word such as "example" or "for example" is intended to present a relative concept in a specific manner.

A network element in a communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. An access network device may send a downlink signal to a terminal device, and/or a terminal device may send an uplink signal to an access network device. In addition, it may be understood that, if the communication system includes a plurality of terminal devices, the plurality of terminal devices may also send signals to each other. That is, both a signal sending network element and a signal receiving network element may be terminal devices.

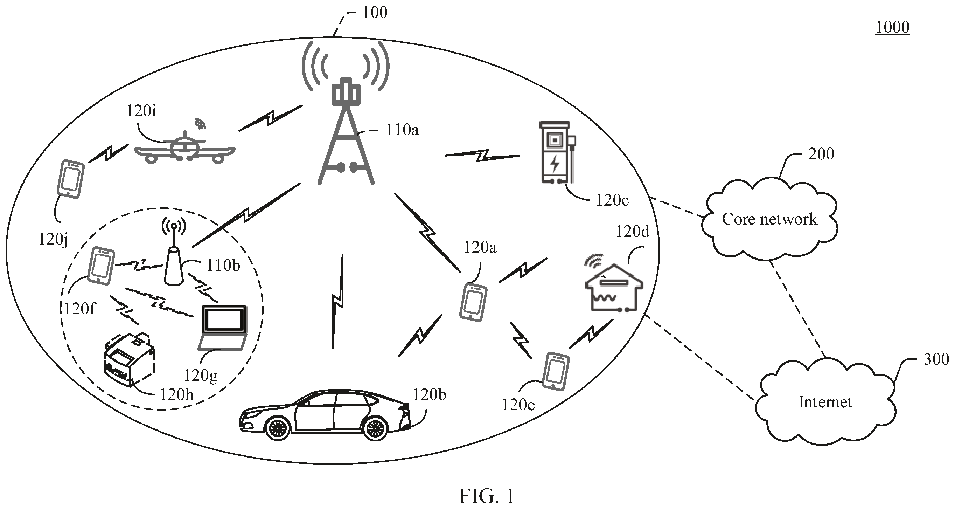

A communication method provided in embodiments of this application may be applied to a wireless communication system like 5G, 6G, or satellite communication. A communication system 1000 includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different and separate physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN). A RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

The terminal is a device having a wireless transceiver function, and may send a signal to the base station, or receive a signal from the base station. The terminal may alternatively be referred to as a terminal device, a user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

In embodiments of this application, a base station is also referred to as a network device, an apparatus for implementing a function of the network device may be a network device, or may be an apparatus that can support a network device in implementing the function, for example, a chip system, a hardware circuit, a software module, or a combination of a hardware circuit and a software module. The apparatus may be mounted in the network device or used in combination with the network device. In embodiments of this application, only an example in which the apparatus for implementing the function of the network device is a network device is used for description, and constitutes no limitation on the solutions in embodiments of this application.

It may be understood that, this application may be applied between the network device and the terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes a sending direction or a receiving direction, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

It should be understood that, a quantity and types of devices in the communication system shown in FIG. 1 are merely used as an example. This application is not limited thereto. In actual application, the communication system may further include more terminal devices and more access network devices, and may further include another network element, for example, may include a core network device and/or a network element configured to implement an artificial intelligence function.

It may be understood that, all or part of functions implemented by one or more of the terminal device, the access network device, the core network device, or the network element configured to implement the artificial intelligence function may be virtualized, that is, implemented by using one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

First, a concept of carrier aggregation in embodiments of this application is described.

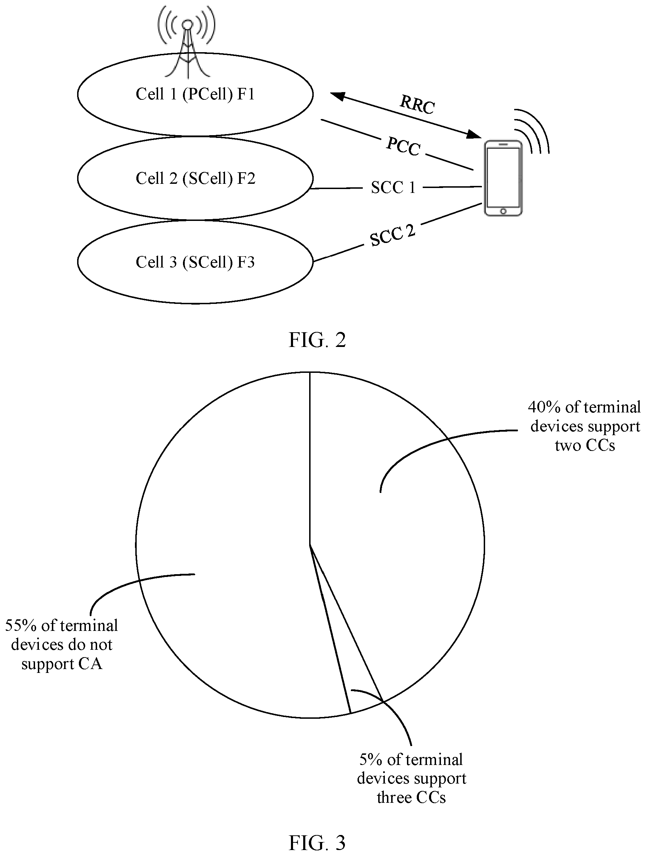

Carrier aggregation is a key technology for overcoming bandwidth limitation of a single carrier. By aggregating two or more component carriers, it enables larger transmission bandwidths to serve terminal devices. FIG. 2 is a diagram of carrier aggregation. A primary component carrier (primary component carrier, PCC), a secondary component carrier (secondary component carrier, SCC) 1, and an SCC 2 are aggregated together to serve a terminal device.

In carrier aggregation, a single UE may be served by a plurality of cells, meaning that one UE may have a plurality of serving cells, including one primary cell (primary cell, PCell) and one or more secondary cells (secondary cells, SCells).

The PCell is a cell in which a UE establishes an initial connection or performs RRC connection reestablishment, or is specified as the primary cell during handover (handover). The PCell is responsible for RRC communication with the UE. A component carrier corresponding to the PCell is referred to as a primary component carrier. A downlink carrier of the PCell is referred to as a downlink primary component carrier (DL PCC), and an uplink carrier of the PCell is referred to as an uplink primary component carrier (UL PCC).

The SCell is added during RRC re-configuration to provide an additional radio resource. There is no RRC communication between the SCell and the UE. A component carrier corresponding to the SCell is referred to as a secondary component carrier. A downlink carrier of the SCell is referred to as a downlink secondary component carrier (DL SCC), and an uplink carrier of the SCell is referred to as an uplink secondary component carrier (UL SCC).

A serving cell may include only one downlink carrier, one downlink carrier and one uplink carrier, or one downlink carrier and two uplink carriers. Therefore, a serving cell may correspond one-to-one with a downlink carrier. Therefore, in this application, the terms carrier (unless otherwise specified, referring to a downlink carrier) and cell may be used interchangeably.

Currently, most carrier resources available to a network side range from four to five CCs, and it is expected that more frequency bands will be available in the future. For example, currently, there are already five CCs, which are specifically two CCs at 2.6 GHz, two CCs at 4.9 GHz, and one CC at 700 MHz. In the future, as the introduction of one CC at 1.8 GHz, one CC in an F frequency band, one CC in an A frequency band, and several CCs in a U6G band, it is expected that more carrier resources will be available.

However, due to cost constraints, terminal devices are limited in a quantity of cells that they can be simultaneously scheduled on (limited in a quantity of physical downlink shared channels (physical downlink shared channel, PDSCH) that can be maximally processed by a baseband of the terminal device), which in turn limits a quantity of carriers that can be simultaneously supported. Specifically, each PDSCH needs an independent baseband processing unit, such as FFT and post-fast Fourier transform data buffering (post-FFT data buffering). A greater quantity of cells that can be simultaneously scheduled (or a greater quantity of PDSCHs that can be simultaneously processed) indicates higher baseband implementation costs. Currently, most terminal devices support at most 2-CC carrier aggregation, with many not supporting CA at all. As shown in FIG. 3, a diagram of carrier aggregation capabilities of terminal devices, 5% of all the terminal devices support three CCs, 40% of all the terminal devices support two CCs, and 55% of all the terminal devices do not support CA.

In conclusion, a quantity of cells configured on a current network far exceeds the quantity of cells that can be simultaneously scheduled by the terminal device. To deliver the best possible user experience, it is necessary to enable flexible use of preferred carrier resources within the limited capability of terminal devices.

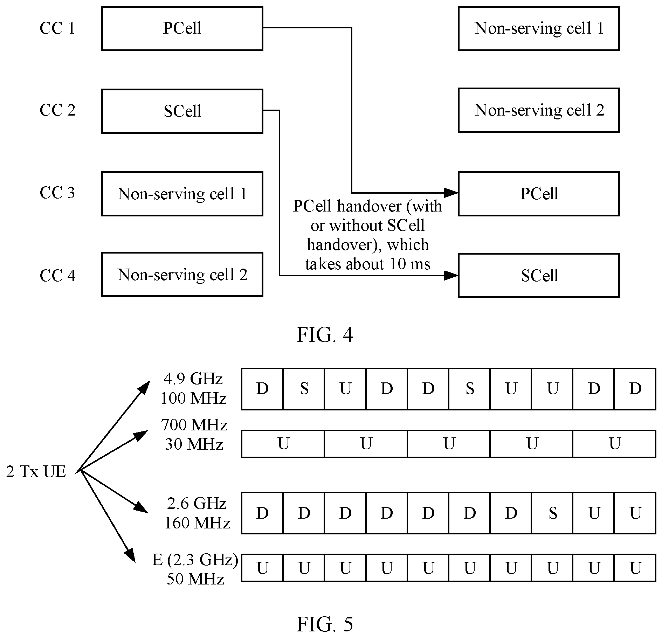

A technology for cell scheduling is an LTM technology. In this technology, a network side configures a plurality of serving cells for a terminal device, and a quantity of the configured serving cells is greater than a quantity of cells that can be simultaneously scheduled by the terminal device. Only an activated serving cell is counted into consumption of a capability of the terminal device. FIG. 4 is a diagram of cell handover based on an LTM technology. A network side configures four serving cells CC 1 to CC 4 for a terminal device, and the terminal device can simultaneously schedule two cells. When the network side uses layer 2 signaling and the LTM technology to indicate cell handover, a CC corresponding to a PCell is switched. In FIG. 4, a CC corresponding to a PCell is switched from the CC 1 to the CC 3. When the CC corresponding to the PCell is switched, a CC corresponding to an SCell may change or may not change. In FIG. 4, a CC corresponding to the SCell is switched from the CC 2 to the CC 4. The layer 2 signaling is used to indicate cell handover with handover time of about 10 ms. The layer 2 signaling includes a medium access control-control element (medium access control-control element, MAC CE) activation signal, which occupies about 5 ms; further includes ASN.1 decoding time and layer 2/layer 3 re-configuration (L2/3 re-cfg.) time, which occupy about 1 ms to 6 ms; and further includes baseband retuning (BB retuning) time and radio frequency retuning (RF retuning) time, which occupy about 1 ms to 2 ms. However, it can be learned from the foregoing that, in the LTM technology, during cell handover, PCell handover is always involved, and it does not support a scenario in which only SCell handover is required.

Another technology for indicating cell handover may support only SCell handover, and is performed by using a procedure of layer 3 (layer 3, L3) signaling, including radio resource control re-configuration signaling (RRC re-configuration signaling), secondary cell activation (SCell activation), radio resource control complete signaling (RRC complete signaling), and the like. A delay is about 50 ms, and is long.

Another technology is an uplink transmit switching (UL Tx switching) technology. FIG. 5 is a diagram of an uplink carrier switching technology. A network side configures and activates a plurality of uplink serving cells for a terminal device, and a quantity of activated uplink serving cells is greater than or equal to a quantity of transmit antennas of the terminal device. In this technology, layer 1 signaling is scheduled to indicate switching of a transmit antenna of the terminal device between different cells, so that dynamic switching of a limited quantity of transmit antennas of the terminal device between a plurality of cells is enabled, and interruption time is approximately several hundred microseconds. However, this technology is essentially intended to resolve a problem of a limited quantity of uplink transmit antennas of the terminal device, and does not support cell handover in a case of a limited quantity of cells that can be simultaneously scheduled by the terminal device during downlink transmission.

It can be learned that the foregoing technologies cannot fully and dynamically use downlink spectrum resources, and therefore cannot enable the terminal device, with its limited capability, to make flexible use of the preferred carrier resource.

Therefore, this application provides a communication solution. An access network device indicates, to a terminal device when configuring a cell, whether the cell can be scheduled in a specific time unit. Based on the indication, the terminal device performs a cell handover, thereby enabling flexible use of a preferred carrier resource even when its downlink baseband processing capability is limited.

The following describes in detail the communication method provided in embodiments of this application.

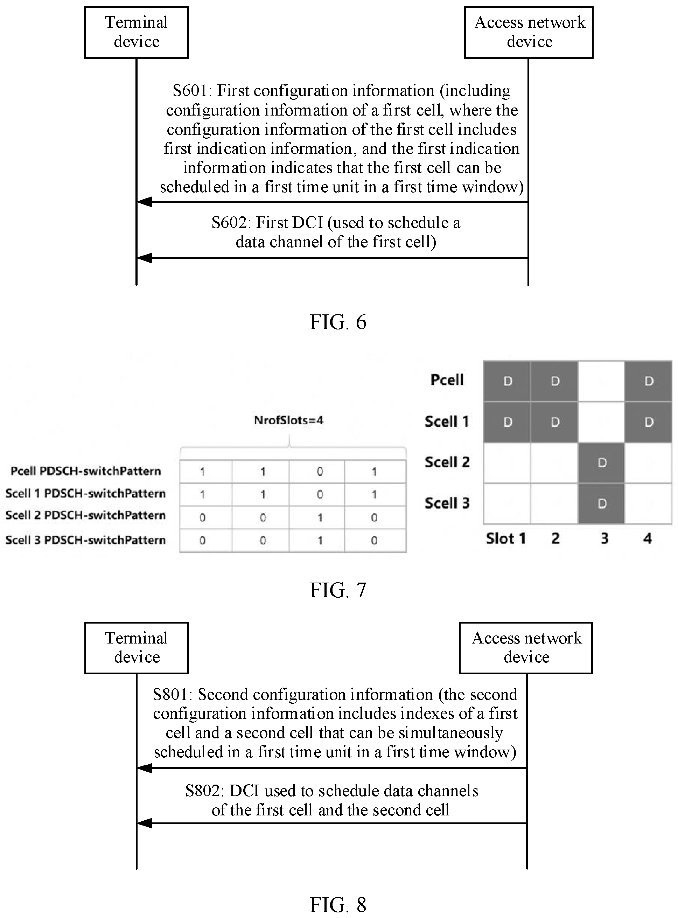

FIG. 6 is a schematic flowchart of a communication method according to an embodiment of this application. For example, the method may include the following steps.

S601: An access network device sends first configuration information. Correspondingly, a terminal device receives the first configuration information.

The access network device may configure one or more serving cells (serving cells) for the terminal device. The serving cell indicates a radio coverage range that operates on a specific carrier and that serves the terminal device. In carrier aggregation, a single terminal device may be served by a plurality of cells. In other words, one terminal device may have a plurality of serving cells, including one PCell and one or more SCells. The PCell is also referred to as a special cell (special cell, SpCell). For example, the access network device may send, to the terminal device, configuration information of one or more serving cells, where the configuration information is used to configure the one or more serving cells.

For example, the access network device sends the first configuration information to the terminal device, where the first configuration information includes configuration information of a first cell. The first cell is any cell in a plurality of serving cells configured by the access network device for the terminal device.

For example, the first configuration information may be RRC signaling, a MAC-CE, or the like.

As described above, a quantity of cells configured by the access network device far exceeds a quantity of cells that can be simultaneously scheduled by the terminal device, and the terminal device cannot simultaneously schedule all the cells configured by the access network device. Therefore, the configuration information of the first cell includes first indication information, and the first indication information indicates that the first cell can be scheduled in a first time unit in a first time window. For example, the first time window may be configured by the access network device, or predefined in a protocol, or pre-negotiated by the access network device and the terminal device. The first time window may include one or more time units. The time unit may be in a unit of a slot (slot), a mini-slot (mini-slot), an orthogonal frequency division multiplexing (orthogonal frequency division multiplexing, OFDM) symbol (symbol), or the like.

The access network device may configure one or more serving cells for the terminal device. Further, the first configuration information may further include configuration information of a second cell. Alternatively, the second cell and the first cell may be simultaneously scheduled in the first time unit. In this case, the configuration information of the second cell includes second indication information, and the second indication information indicates that the second cell can be simultaneously scheduled in the first time unit.

The first configuration information may further include configuration information of more cells. In this embodiment, the first cell and the second cell are used as an example for description.

For example, the first cell and the second cell may be a PCell or an SCell. The first configuration information may be represented by using a CellGroupConfig (CellGroupConfig) field. CellGroupConfig includes the configuration information of the one or more serving cells, and the one or more serving cells include a PCell and one or more SCells. Further, the configuration information of the first cell or the configuration information of the second cell may be represented by using a serving cell configuration field (SpCellConfig or sCellConfig field) in CellGroupConfig. The SpCellConfig field is RRC signaling used to configure an SpCell, and the SCellConfig field is RRC signaling used to configure an SCell. The first indication information or the second indication information may be an added physical downlink shared channel-switchPattern (PDSCH-switchPattern) field in the SpCellConfig or sCellConfig field.

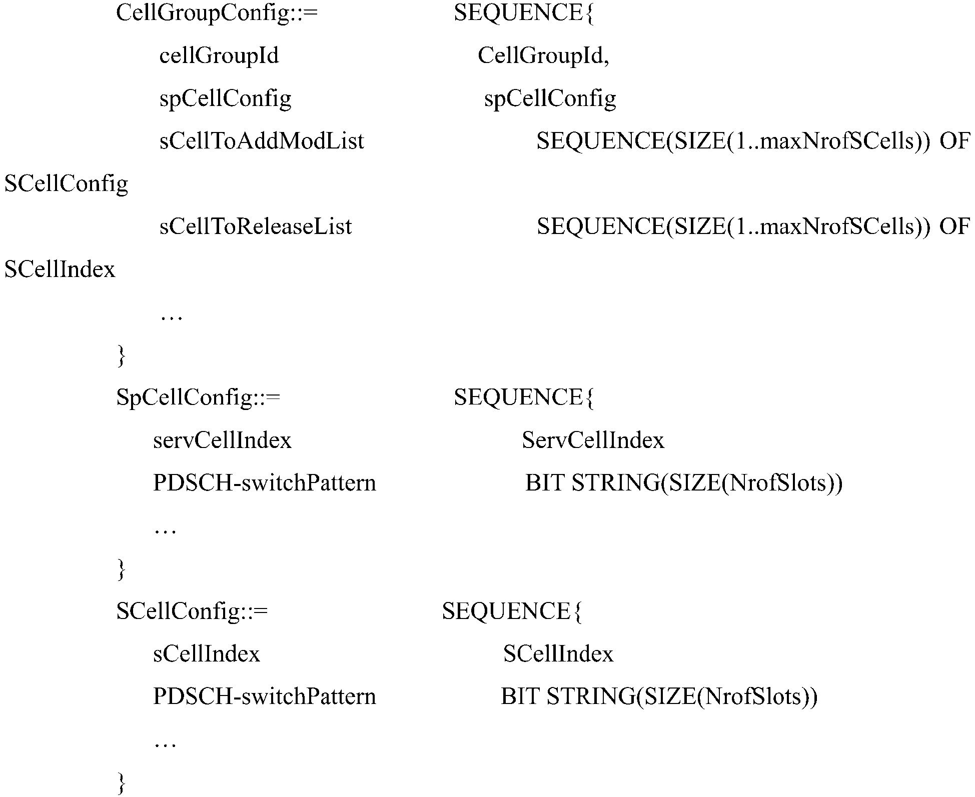

PDSCH-switchPattern has a periodic characteristic, and a periodic length is a length of the first time window.

In a possible implementation, the first indication information may be a bitmap (bitmap). A length (NrofSlots) of the bitmap is a quantity of time units in the first time window.

A first bit of the bitmap indicates that the first cell can be scheduled in the first time unit (that is, the first cell can perform PDSCH transmission in the first time unit) in the first time window; and a second bit of the bitmap indicates that the first cell cannot be scheduled in a second time unit (that is, the first cell cannot perform PDSCH transmission in the second time unit) in the first time window. For example, the first bit of the bitmap is "1", and the second bit of the bitmap is "0"; or the first bit in the bitmap is "0", and the second bit in the bitmap is "1".

For an implementation of the second indication information, refer to an implementation of the first indication information.

FIG. 7 is a diagram of an example of cell scheduling. In this example, an access network device configures four serving cells: a PCell, a SCell 1, a SCell 2, and a SCell 3. A first time window includes four slots: a slot 1 to a slot 4. SpCellConfig includes a Pcell PDSCH-switchPattern field. The field may be a bitmap, a length of the bitmap is 4, and four bits of the bitmap respectively indicate whether the PCell can be scheduled in the four slots ("1" indicates that the PCell can be scheduled in the slot, or "0" indicates that the PCell cannot be scheduled in the slot). It can be seen from FIG. 7 that the PCell can be scheduled in the slot 1, the slot 2, and the slot 4, and cannot be scheduled in the slot 3. Similarly, SCellConfig of the SCell 1 includes a Scell 1 PDSCH-switchPattern field. The field may be a bitmap, a length of the bitmap is also 4, and four bits of the bitmap respectively indicate whether the SCell 1 can be scheduled in the four slots ("1" indicates that the SCell 1 can be scheduled in the slot, or "0" indicates that the SCell 1 cannot be scheduled in the slot). It can be seen from FIG. 7 that the SCell 1 can be scheduled in the slot 1, the slot 2, and the slot 4, and cannot be scheduled in the slot 3. Similarly, the SCell 2 and the SCell 3 may be scheduled in the slot 3, and cannot be scheduled in the slot 1, the slot 2, and the slot 4.

To be specific, the PCell and the SCell 1 can be simultaneously scheduled in the slot 1, the slot 2, and the slot 4, and a terminal device may simultaneously perform PDSCH transmission on the PCell and the SCell 1; and the SCell 2 and the SCell 3 can be simultaneously scheduled in the slot 3, and the terminal device switches to the SCell 2 and the SCell 3 to perform PDSCH transmission.

In this way, the terminal device can determine, based on indication information in configuration information of cells, cells that can be simultaneously scheduled in a time unit, that is, the terminal device can determine, based on the PDSCH-switchPattern field in the SpCellConfig or sCellConfig field, cells that can be simultaneously scheduled in a time unit. This enables flexible handover among the cells that can be scheduled and empowers the limited capability of the terminal device to make flexible use of a preferred carrier resource, ultimately improving user experience.

The "flexible" herein includes two meanings. A first meaning is that handover is not limited to a PCell or a SCell, and handover between all cells can be supported. A second meaning is that a switching delay is short (switching requires only a switching delay of a time unit level), and switching can quickly adapt to changes of channels, loads, and frame structures of different carriers.

It should be noted that the quantity of cells that can be simultaneously scheduled, as indicated by the first configuration information, is less than or equal to a quantity of configured cells. As shown in FIG. 7, there are four cells configured by the access network device, but only two cells can be simultaneously scheduled.

In addition, the terminal device may further report capability information to the access network device, where the capability information indicates a quantity of cells that can be simultaneously scheduled. The quantity of cells configured by the access network device is greater than or equal to the quantity of cells that can be simultaneously scheduled, as indicated by the capability information reported by the terminal device. The quantity of cells that can be simultaneously scheduled, as indicated by the first configuration information, is less than or equal to the quantity of cells that can be simultaneously scheduled, as indicated by the capability information reported by the terminal device.

S602: The access network device sends first downlink control information (downlink control information, DCI). Correspondingly, the terminal device receives the first DCI.

After the access network device configures the first cell, and configures that the first cell may be scheduled in the first time unit in the first time window, the access network device sends the first DCI to the terminal device, where the first DCI is used to schedule a data channel of the first cell, so as to send data to the terminal device through the data channel of the first cell.

If the first cell may be scheduled in another time unit in the first time window, the access network device also sends DCI to the terminal device, to schedule the data channel of the first cell.

If the access network device further configures another cell, for a scheduling manner of the another cell, refer to a scheduling manner of the first cell.

According to the communication method provided in embodiments of this application, the access network device indicates, to the terminal device when configuring a cell, whether the cell can be scheduled in a specific time unit. Based on the configuration, the terminal device performs a cell handover, thereby enabling flexible use of a preferred carrier resource even when its downlink baseband processing capability is limited.

In view of the technical problem provided in this application, this application further provides a communication solution. An access network device includes, in configuration information, indexes of cells that can be simultaneously scheduled in a time unit in a time window. Based on the configuration information, the terminal device performs a cell handover, thereby enabling flexible use of a preferred carrier resource even when its downlink baseband processing capability is limited.

FIG. 8 is a schematic flowchart of another communication method according to an embodiment of this application. For example, the method may include the following steps.

S801: An access network device sends second configuration information. Correspondingly, a terminal device receives the second configuration information.

The access network device may configure one or more serving cells for the terminal device. For example, the access network device may send, to the terminal device, second configuration information of one or more serving cells, where the second configuration information is used to configure the one or more serving cells.

As described above, a quantity of cells configured by the access network device far exceeds a quantity of cells that can be simultaneously scheduled by the terminal device, and the terminal device cannot simultaneously schedule all the cells configured by the access network device. In this embodiment, the second configuration information further includes indexes of a first cell and a second cell that can be simultaneously scheduled in a first time unit in a first time window.

For example, the first time window may be configured by the access network device, or predefined in a protocol, or pre-negotiated by the access network device and the terminal device. The first time window may include one or more time units. The time unit may be in a unit of a slot, a mini-slot, an OFDM symbol, or the like.

In coverage of the access network device, an index of a cell is unique, and each index uniquely identifies a cell.

For example, the second configuration information may indicate not only indexes of cells that can be simultaneously scheduled in one time unit in the first time window. Further, the second configuration information may further include indexes of the first cell and a third cell that can be simultaneously scheduled in a second time unit in the first time window. The third cell may be the same as the second cell, or may be different from the second cell. The first time unit and the second time unit are any time units in the first time window.

In addition, the access network device may further configure, in the second configuration information, indexes of a fourth cell and a fifth cell that are simultaneously scheduled in a third time unit in the first time window. The fourth cell and the fifth cell may be cells that are partially or totally different from the first cell to the third cell, and the third time unit may be a time unit different from the first time unit and the second time unit.

For example, the second configuration information may be RRC signaling, a MAC-CE, or the like.

For example, each of the first cell to the fifth cell may be a PCell or an SCell. The second configuration information may be represented by using a CellGroupConfig (CellGroupConfig) field. CellGroupConfig includes the configuration information of the one or more serving cells, and the one or more serving cells include a PCell and one or more SCells. One or more PDSCH-switchPattern fields may be added to CellGroupConfig. One PDSCH-switchPattern field includes indexes of a plurality of cells that can be simultaneously scheduled in one or more time units in the first time window. A quantity of indexes, of cells, included in the PDSCH-switchPattern field is not limited, and is extensible. A length of the PDSCH-switchPattern field is NrofSlots, namely, a quantity of all time units included in the first time window. That is, a length of the PDSCH-switchPattern field is related to a quantity of time units semi-statically configured by the access network device, so that a length of a semi-static configuration periodicity of carrier switching and capabilities of different terminal devices are extensible.

CellGroupConfig is as follows:

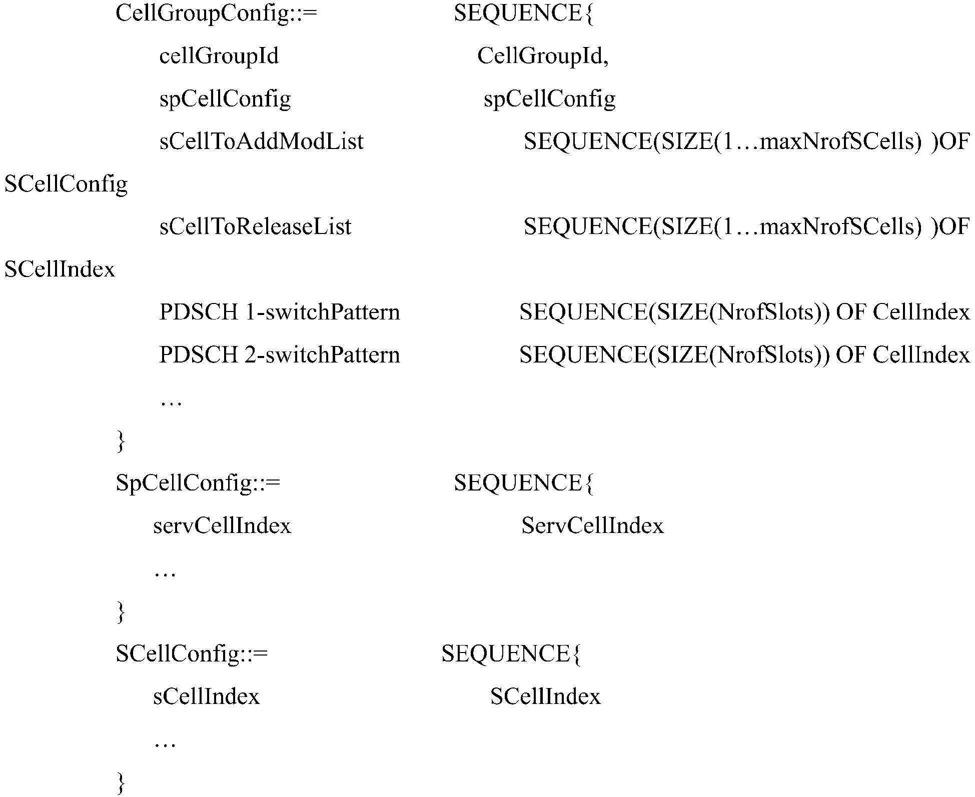

Two PDSCH-switchPattern fields, namely, a PDSCH 1-switchPattern field and a PDSCH 2-switchPattern field, are added to CellGroupConfig.

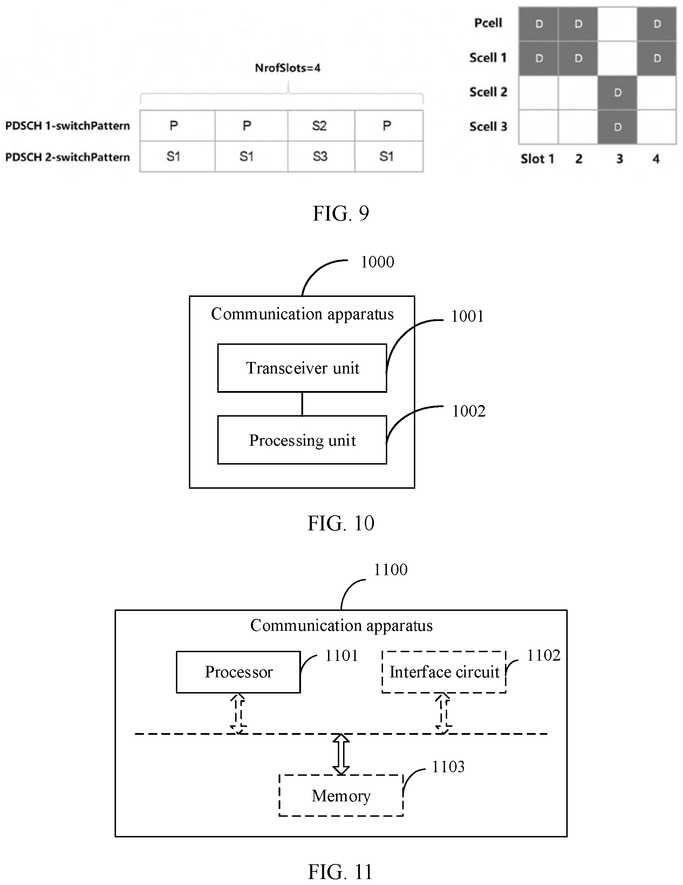

FIG. 9 is a diagram of another example of cell scheduling. In this example, an access network device configures four serving cells: a PCell, a SCell 1, a SCell 2, and a SCell 3. A first time window includes four slots: a slot 1 to a slot 4. A PDSCH 1-switchPattern field indicates an index of the Pcell that can be simultaneously scheduled in the slot 1 in the first time window, and a PDSCH 2-switchPattern field indicates an index of the Scell 1 that can be simultaneously scheduled in the slot 1 in the first time window; the PDSCH 1-switchPattern field indicates the index of the Pcell that can be simultaneously scheduled in the slot 2 in the first time window, and the PDSCH 2-switchPattern field indicates the index of the Scell 1 that can be simultaneously scheduled in the slot 2 in the first time window; the PDSCH 1-switchPattern field indicates an index of the Scell 2 that can be simultaneously scheduled in the slot 3 in the first time window, and the PDSCH 2-switchPattern field indicates an index of the Scell 3 that can be simultaneously scheduled in the slot 3 in the first time window; and the PDSCH 1-switchPattern field indicates the index of the Pcell that can be simultaneously scheduled in the slot 4 in the first time window, and the PDSCH 2-switchPattern field indicates the index of the Scell 1 that can be simultaneously scheduled in the slot 4 in the first time window.

Based on the PDSCH 1-switchPattern field and the PDSCH 2-switchPattern field, the terminal device may switch to a downlink carrier on which PDSCH transmission is to be performed. This empowers the limited capability of the terminal device to make flexible use of a preferred carrier resource, ultimately improve user experience.

It should be noted that a quantity of cells that can be simultaneously scheduled, as indicated by the second configuration information, is less than or equal to a quantity of cells configured by the access network device.

In addition, the terminal device may further report capability information of the terminal device to the access network device, where the capability information indicates a quantity of cells that can be simultaneously scheduled. The quantity of cells configured by the access network device is greater than or equal to the quantity of cells that can be simultaneously scheduled, as indicated by the capability information reported by the terminal device. The quantity of cells that can be simultaneously scheduled, as indicated by the second configuration information, is less than or equal to the quantity of cells that can be simultaneously scheduled, as indicated by the capability information reported by the terminal device.

S802: The access network device sends DCI used to schedule data channels of the first cell and the second cell. Correspondingly, the terminal device receives the DCI.

After configuring the indexes of the first cell and the second cell that can be simultaneously scheduled in the first time unit in the first time window, the access network device sends the DCI to the terminal device, where the DCI is used to schedule the data channels of the first cell and the second cell, so that the terminal device can receive, based on the DCI, data sent by the access network device through the data channels of the first cell and the second cell.

Further, if the second configuration information may further include the indexes of the first cell and the third cell that can be simultaneously scheduled in the second time unit in the first time window, the access network device may further send, to the terminal device, DCI used to schedule data channels of the first cell and the third cell.

According to the communication method provided in embodiments of this application, the access network device includes, in configuration information, indexes of cells that can be simultaneously scheduled in a time unit in a time window. Based on the configuration information, the terminal device performs a cell handover, thereby enabling flexible use of a preferred carrier resource even when its downlink baseband processing capability is limited.

It may be understood that, in this application, an example in which the access network device and the terminal device serve as execution bodies of an interaction example is used for description. However, the execution body of the interaction example is not limited in this application. For example, the access network device in the method provided in this application may alternatively be a chip, a chip system, or a processor used in the access network device, or may be a logical node, a logical module, or software that can implement all or part of functions of the access network device. The terminal device in the method provided in this application may alternatively be a chip, a chip system, or a processor used in the terminal device, or may be a logical node, a logical module, or software that can implement all or part of functions of the terminal device.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, in the foregoing embodiments, the method and/or steps implemented by the access network device may alternatively be implemented by a component (for example, a chip or a circuit) that is used in the access network device, and the method and/or steps implemented by the terminal device may alternatively be implemented by a component (for example, a chip or a circuit) that is used in the terminal device.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the access network device in the foregoing method embodiments or a component that can be used in the access network device; or the communication apparatus may be the terminal device in the foregoing method embodiments or a component that can be used in the terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing unit. The integrated module may be implemented in a form of hardware, or may be implemented in a form of a software functional module. It should be noted that in embodiments of this application, division into the modules is an example, and is merely a logical function division. In actual implementation, another division manner may be used.

Based on the same idea of the foregoing communication method, this application further provides the following communication apparatuses.

FIG. 10 is a diagram of a structure of a communication apparatus according to an embodiment of this application. The communication apparatus 1000 includes a transceiver unit 1001 and a processing unit 1002.

When the communication apparatus is configured to implement the functions of the terminal device in the foregoing method embodiments, the transceiver unit 1001 may be configured to perform operations of the terminal device in steps S601 and S602 in the embodiment shown in FIG. 6; or the transceiver unit 1001 may be configured to perform operations of the terminal device in steps S801 and S802 in the embodiment shown in FIG. 8.

When the communication apparatus is configured to implement the functions of the access network device in the foregoing method embodiments, the transceiver unit 1001 may be configured to perform operations of the access network device in steps S601 and S602 in the embodiment shown in FIG. 6; or the transceiver unit 1001 may be configured to perform operations of the access network device in steps S801 and S802 in the embodiment shown in FIG. 8.

For specific implementations of the transceiver unit 1001 and the processing unit 1002, refer to the descriptions in the foregoing method embodiments.

FIG. 11 is a diagram of a structure of another communication apparatus according to an embodiment of this application. The communication apparatus 1100 includes a processor 1101. Optionally, the communication apparatus 1100 may further include an interface circuit 1102 (represented by dashed lines in the figure). The processor 1101 and the interface circuit 1102 are coupled to each other. It may be understood that, the interface circuit 1102 may be a transceiver or an input/output interface. Optionally, the communication apparatus 1100 may further include a memory 1103 (represented by dashed lines in the figure). The memory 1103 is configured to store instructions executed by the processor 1101, or store input data required by the processor 1101 to run instructions, or store data generated after the processor 1101 runs instructions. The processor 1101 is configured to implement a function of the processing unit 1002 in the embodiment shown in FIG. 10, and the interface circuit 1102 is configured to implement a function of the transceiver unit 1001 in the embodiment shown in FIG. 10.

When the communication apparatus is a chip used in an access network device, the chip implements the functions of the access network device in the foregoing method embodiments. The chip receives information from another module (for example, a radio frequency module or an antenna) in the access network device, and the information is sent by a terminal device to the access network device. Alternatively, the chip sends information to another module (for example, a radio frequency module or an antenna) in the access network device, and the information is sent by the access network device to a terminal device.

When the communication apparatus is a chip used in a terminal device, the chip implements the functions of the terminal device in the foregoing method embodiments. The chip receives information from another module (for example, a radio frequency module or an antenna) in the terminal device, and the information is sent by an access network device to the terminal device. Alternatively, the chip sends information to another module (for example, a radio frequency module or an antenna) in the terminal device, and the information is sent by the terminal device to an access network device.

In addition, it should be noted that the transceiver unit and/or the processing unit may be implemented via a virtual module. For example, the processing unit may be implemented via a software functional unit or a virtual apparatus, and the transceiver unit may be implemented via a software function or a virtual apparatus. Alternatively, the processing unit or the transceiver unit may be implemented via a physical apparatus. For example, if the apparatus is implemented via a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

Division into the modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

When the communication apparatus is a module used in a base station, the module in the base station implements the functions of the base station in the foregoing method embodiments. The module in the base station receives information from another module (for example, a radio frequency module or an antenna) in the base station, and the information is sent by a terminal device to the base station. Alternatively, the module in the base station sends information to another module (for example, a radio frequency module or an antenna) in the base station, and the information is sent by the base station to a terminal device. The module in the base station herein may be a baseband chip of the base station, a CU, a DU, or another module, or may be an apparatus in an open radio access network (open radio access network, O-RAN) architecture, for example, an apparatus like an open CU or an open DU.

It should be noted that the foregoing units or one or more of the foregoing units may be implemented by software, hardware, or a combination of software and hardware. When any one unit or units are implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include the chip and another discrete device. This is not specifically limited in embodiments of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or the memory may be a volatile memory (volatile memory), for example, a random-access memory (random-access memory, RAM).

All or some of the foregoing embodiments may be implemented by using software, hardware, firmware, or any combination thereof. When a software program is used to implement embodiments, all or part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

It may be understood that, various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A communication method, performed by a terminal device or a module used in a terminal device, wherein the method comprises:
receiving first configuration information, wherein the first configuration information comprises configuration information of a first cell, the configuration information of the first cell comprises first indication information, and the first indication information indicates that the first cell can be scheduled in a first time unit in a first time window; and
receiving first downlink control information, wherein the first downlink control information is used to schedule a data channel of the first cell.

2. A communication method, performed by an access network device or a module used in an access network device, wherein the method comprises:
sending first configuration information, wherein the first configuration information comprises configuration information of a first cell, the configuration information of the first cell comprises first indication information, and the first indication information indicates that the first cell can be scheduled in a first time unit in a first time window; and
sending first downlink control information, wherein the first downlink control information is used to schedule a data channel of the first cell.

3. The method according to claim 1 or 2, wherein the first indication information is a bitmap, and a length of the bitmap is a quantity of time units in the first time window.

4. The method according to claim 3, wherein a first bit of the bitmap indicates that the first cell can be scheduled in the first time unit in the first time window; and
a second bit of the bitmap indicates that the first cell cannot be scheduled in a second time unit in the first time window.

5. The method according to any one of claims 1 to 4, wherein the first configuration information further comprises configuration information of a second cell, the configuration information of the second cell comprises second indication information, and the second indication information indicates that the second cell can be simultaneously scheduled in the first time unit.

6. The method according to any one of claims 1 to 5, wherein a quantity of cells capable of being simultaneously scheduled, as indicated by the first configuration information, is less than or equal to a quantity of configured cells.

7. The method according to any one of claims 1 to 6, wherein the quantity of configured cells is greater than or equal to a quantity of cells capable of being simultaneously scheduled, as indicated by capability information reported by the terminal device.

8. The method according to any one of claims 1 to 7, wherein the quantity of cells capable of being simultaneously scheduled, as indicated by the first configuration information, is less than or equal to the quantity of cells capable of being simultaneously scheduled, as indicated by the capability information reported by the terminal device.

9. A communication apparatus, wherein the apparatus comprises a transceiver unit;
the transceiver unit is configured to receive first configuration information, wherein the first configuration information comprises configuration information of a first cell, the configuration information of the first cell comprises first indication information, and the first indication information indicates that the first cell can be scheduled in a first time unit in a first time window; and
the transceiver unit is further configured to receive first downlink control information, wherein the first downlink control information is used to schedule a data channel of the first cell.

10. A communication apparatus, wherein the apparatus comprises a transceiver unit;
the transceiver unit is configured to send first configuration information, wherein the first configuration information comprises configuration information of a first cell, the configuration information of the first cell comprises first indication information, and the first indication information indicates that the first cell can be scheduled in a first time unit in a first time window; and
the transceiver unit is further configured to send first downlink control information, wherein the first downlink control information is used to schedule a data channel of the first cell.

11. The apparatus according to claim 9 or 10, wherein the first indication information is a bitmap, and a length of the bitmap is a quantity of time units in the first time window.

12. The apparatus according to claim 11, wherein a first bit of the bitmap indicates that the first cell can be scheduled in the first time unit in the first time window; and
a second bit of the bitmap indicates that the first cell cannot be scheduled in a second time unit in the first time window.

13. The apparatus according to any one of claims 9 to 12, wherein the first configuration information further comprises configuration information of a second cell, the configuration information of the second cell comprises second indication information, and the second indication information indicates that the second cell can be simultaneously scheduled in the first time unit.

14. The apparatus according to any one of claims 9 to 13, wherein a quantity of cells capable of being simultaneously scheduled, as indicated by the first configuration information, is less than or equal to a quantity of configured cells.

15. The apparatus according to any one of claims 9 to 14, wherein the quantity of configured cells is greater than or equal to a quantity of cells capable of being simultaneously scheduled, as indicated by capability information reported by the communication apparatus.

16. The apparatus according to any one of claims 9 to 15, wherein the quantity of cells capable of being simultaneously scheduled, as indicated by the first configuration information, is less than or equal to the quantity of cells capable of being simultaneously scheduled, as indicated by the capability information reported by the communication apparatus.

17. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 8 by using a logic circuit or by executing code instructions.

18. A computer-readable storage medium, wherein the storage medium stores a computer program or instructions, and when the computer program or the instructions are executed by a communication apparatus, the method according to any one of claims 1 to 8 is implemented.

19. A computer program product comprising instructions, wherein when the instructions are run on a communication apparatus, the method according to any one of claims 1 to 8 is implemented.
